# EUROPEAN PATENT APPLICATION

(11) **EP 4 759 549 A1**
(43) Date of publication of application: **17.06.2026**
(21) Application number: 24851487.9
(22) Date of filing: 08.07.2024
(51) Int. Cl.: B41J 2/32, B41J 3/36, B41J 11/04, B41J 11/42, G06K 19/07

(54) **PRINTER, INFORMATION PROCESSING METHOD, AND PROGRAM**

(30) Priority: 08.08.2023 JP 2023128944
(71) Applicant: SATO Corporation, Tokyo 108-0023 (JP)
(72) Inventor: ARAI, Hidekazu, Tokyo 108-0023 (JP)
(74) Representative: Grünecker Patent- und Rechtsanwälte PartG mbB
(86) International application number: PCT/JP2024/024584
(87) International publication number: WO 2025/033057

(57) **Abstract**

A printer according to an aspect of the present invention issues a print medium including an RFID inlay. The printer includes an RFID unit and a control unit. The RFID unit communicates with the RFID inlay of the print medium. The control unit is configured to control the RFID unit to read first data in a first memory area of a plurality of memory areas included in the RFID inlay and write the first data or second data that is based on the first data, to a second memory area, which is different from the first memory area, of a plurality of the memory areas.

## Description

### FIELD

The present invention relates to a printer that issues a print medium including an RFID inlay, an information processing method that uses the printer, and a program.

### BACKGROUND

A known printer prints on a label in which a radio frequency identification (RFID) inlay (hereinafter, simply referred to as "inlay") including an IC chip and an antenna is incorporated. Such a printer writes data to the inlay incorporated in the label at the time of printing on the label. Conventionally, the data to be written in the inlay are data previously stored in a memory of the printer.

For example, Japanese Patent Application Laid-Open Publication No. 2022-088837 describes a label printer that writes data to an RF tag (corresponding to the above-described inlay) attached to a label sheet. The label printer is configured to write, to the wireless tag, tag data including sales price and the like in a case of issuing the label to be affixed to a product displayed and sold in a store. Thereby, the tag data can be captured by a POS terminal or the like. Such tag data are stored in a memory of the printer.

### BRIEF SUMMARY

### TECHNICAL PROBLEM

Incidentally, the IC chip included in the inlay stores data such as code information for identifying the inlay and code information for identifying a product to which the label is affixed. There is room that using such data or data based on such data in a case of writing the data to the inlay can increase expandability or flexibility of management in distributing articles to which the labels are affixed.

In view of the above, an object of the present invention is to increase expandability or flexibility in using a print medium that includes an RFID inlay.

### SOLUTION TO PROBLEM

An aspect of the present invention provides a printer that issues a print medium including an RFID inlay. The printer comprises:
an RFID unit that communicates with the RFID inlay of the print medium; and
a control unit configured to control the RFID unit to read first data in a first memory area of a plurality of memory areas included in the RFID inlay and write the first data or second data that is based on the first data, to a second memory area, which is different from the first memory area, of a plurality of the memory areas.

### ADVANTAGEOUS EFFECTS

According to an aspect of the present invention, expandability or flexibility in using a print medium that includes an RFID inlay can be increased.

### BRIEF DESCRIPTION OF DRAWINGS

FIG. 1 illustrates a system configuration of a label issuance system according to one embodiment.
FIG. 2 illustrates a schematic configuration inside a housing of a printer according to one embodiment.
FIG. 3A is an illustration of a label to be issued by the printer according to one embodiment.
FIG. 3B is an illustration of a configuration of a memory included in an IC chip of an inlay.
FIG. 4 is a schematic block diagram of the printer according to one embodiment.
FIG. 5 illustrates one example of feed control of the printer according to one embodiment.
FIG. 6 is a flowchart illustrating an example of processing executed by the printer according to one embodiment.
FIG. 7 is a sequence chart illustrating an operation example of the label issuance system according to one embodiment.
FIG. 8 is a sequence chart illustrating an operation example of the label issuance system according to one embodiment.
FIG. 9 illustrates an example of an image displayed on the printer according to one embodiment.
FIG. 10 illustrates an example of an image displayed on the printer according to one embodiment.

### DETAILED DESCRIPTION

The below-described embodiments are not limited to those in the drawings described in the Brief Description of Drawings.

A first aspect of the present invention provides a printer that issues a print medium including an RFID inlay, the printer comprising:
an RFID unit that communicates with the RFID inlay of the print medium; and
a control unit configured to control the RFID unit to read first data in a first memory area included in a plurality of memory areas of the RFID inlay and write the first data or second data that is based on the first data, to a second memory area, which is different from the first memory area, of a plurality of the memory areas.

According to the first aspect of the present invention, expandability or flexibility in using the print medium including the RFID inlay can be increased.

A second aspect of the present invention provides the printer according to the first aspect further including a platen roller that feeds the print medium, wherein
the control unit is configured to control the platen roller to feed the print medium from a print start position to a communication position, and feed the print medium back to the print start position after reading the first data from the RFID inlay, wherein the print start position is a position at which printing on the print medium is started, and the communication position is a position at which communication with the RFID inlay of the print medium is performed by the RFID unit.

According to the second aspect of the present invention, the print medium is fed back to the print start position after the first data has been read. Thus, the first data or the second data can be then written to the RFID or printed on the print medium. For this reason, flexibility in using the print medium including the RFID inlay can be increased.

A third aspect of the present invention provides the printer according to the second aspect, wherein the control unit is configured to control the platen roller to feed the print medium from the print start position to the communication position after feeding the print medium back to the print start position, and feed the print medium back to the print start position after writing the second data to the RFID inlay.

According to the third aspect of the present invention, printing can be performed on the print medium after the first data or the second data has been written to the RFID.

A fourth aspect of the present invention provides the printer according to any one of the first to third aspects including a communication unit that communicates with an external information processing device, wherein
the communication unit is configured to transmit, to the information processing device, the first data read from the first memory area, and receive the second data from the information processing device.

According to the fourth aspect of the present invention, based on first data, the external information processing device can generate the second data to be written to the RFID inlay. Thus, expandability or flexibility in using the print medium including the RFID inlay can be further increased.

A fifth aspect of the present invention provides the printer according to any one of the first to fourth aspects, wherein the control unit is configured to: write the second data to the second memory area, and then read data in at least one memory area of a plurality of the memory areas and record the read data as log data.

According to the fifth aspect of the present invention, content that has been written to the RFID inlay of the print medium is recorded. Thus, traceability for each print medium can be secured.

A sixth aspect of the present invention provides the printer according to the fifth aspect, wherein the control unit is configured to read the data in one or more memory areas of a plurality of the memory areas and pre-selected by a user, and record the read data as the log data.

According to the sixth aspect of the present invention, only the data required by the user can be recorded.

A seventh aspect of the present invention provides the printer according to the sixth aspect, wherein a plurality of the memory areas includes a user area available to a user, and
when the user area of a plurality of the memory areas is selected, the control unit is configured to determine, based on user input, an address area in the user area, the address area having a size allowing the log data to be recorded therein.

According to the seventh aspect of the present invention, the record data are a limited part of data in the user area. Thus, time required to record the log data for each issuance of the print medium is shortened. Thus, throughput of issuing the print media is improved.

An eighth aspect of the present invention provides an information processing method by a printer that issues a print medium including an RFID inlay, wherein the information processing method comprising:
reading, by use of an RFID unit, first data in a first memory area of a plurality of memory areas included in the RFID inlay; and
writing, by use of the RFID unit, the first data or second data that is based on the first data, to a second memory area, which is different from the first memory area, of a plurality of the memory areas.

According to the eighth aspect of the present invention, expandability or flexibility in using the print medium including the RFID inlay can be increased.

A ninth aspect of the present invention is a program, when installed in a printer configured to issue a print medium including an RFID inlay, causing a computer to execute processing comprising:
reading, by use of an RFID unit of the printer, first data in a first memory area included in a plurality of memory areas included in the RFID inlay; and
writing, by use of the RFID unit, the first data or second data that is based on the first data, to a second memory area, which is different from the first memory area, of a plurality of the memory areas.

According to the ninth aspect of the present invention, expandability or flexibility in using the print medium including the RFID inlay can be increased.

The following describes embodiments in detail with reference to the drawings.

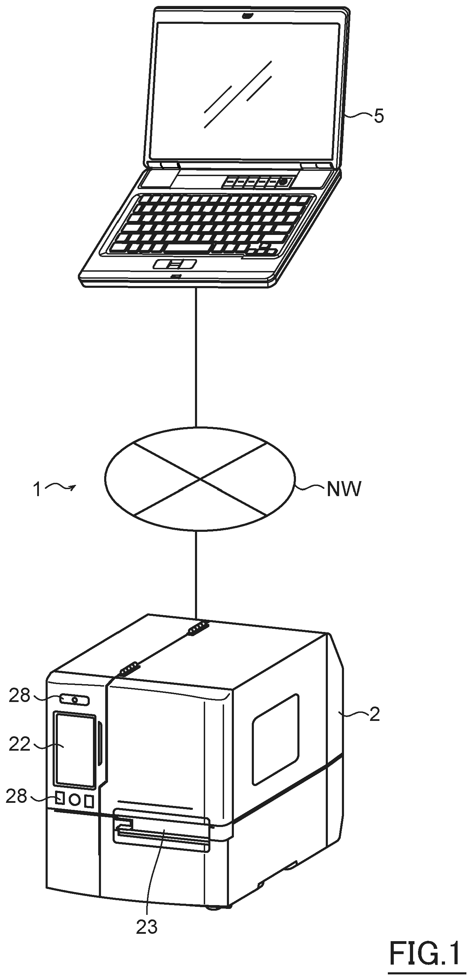

FIG. 1 illustrates a schematic system configuration of a label issuance system 1 according to one embodiment.

In FIG. 1, a printer 2 and a host computer 5 (one example of an information processing device) can communicate with each other via a network NW. Although not particularly limited, the network NW may be a local area network (LAN), the Internet, or the like.

The host computer 5 is illustrated as a laptop-type information processing terminal for example, but is not limited to this and may be a tablet-type terminal or a smartphone.

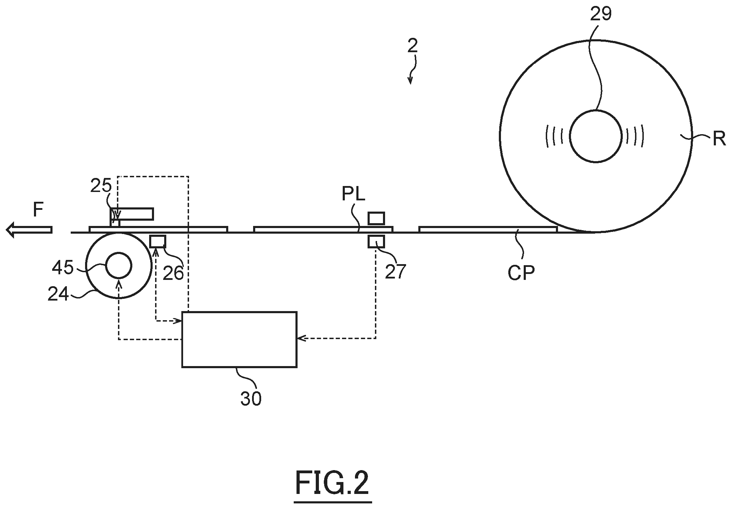

As described below, the printer 2 is a label printer that issues a label. The printer 2 issues the label in response to a request from the host computer 5. FIG. 2 illustrates, as a mere example, an external configuration of the printer 2. The printer 2 may include a display panel 22 and input buttons 28, for example. An issuance outlet 23 is an opening from which the label is issued (discharged).

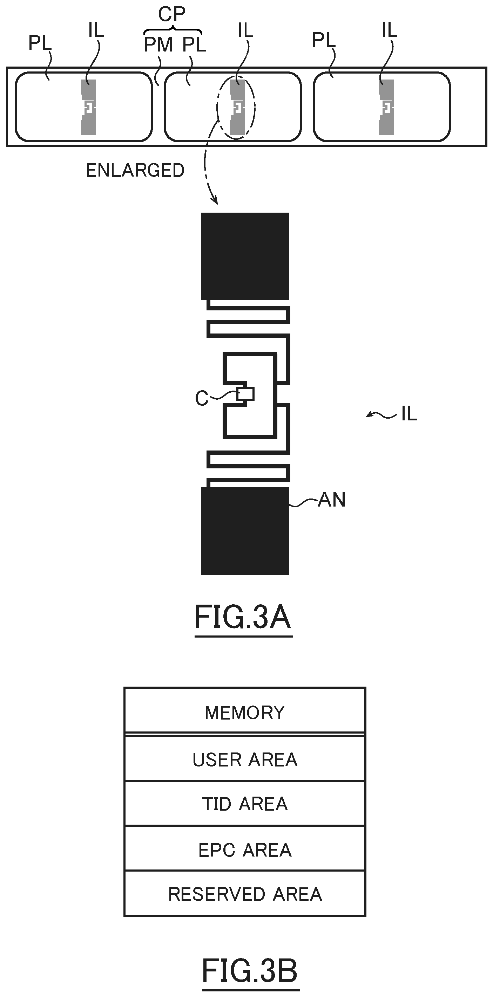

The printer 2 is described with reference to FIG. 2 and FIG. 3A.

FIG. 2 illustrates a schematic configuration inside a housing of the printer 2. As illustrated in FIG. 2, the printer 2 includes a support shaft 29 loaded with a paper roll R. The paper roll R is a continuous paper CP wound into a roll shape. As illustrated in FIG. 3A, the continuous paper CP includes a band-shaped liner PM and a plurality of labels PL peelably attached at an interval on the liner PM. An adhesive is applied to a back surface (a surface opposite to a print surface) of the label PL, and thus forms an adhesive surface. The liner PM includes a surface (front surface) with which the adhesive surfaces of the labels PL contact and that is formed by a coat of a peeling agent such as silicone to enable the labels PL to be easily peeled. An RFID inlay IL (hereinafter, simply referred to as "inlay IL") is incorporated in the label PL. As illustrated in an enlarged view in FIG. 3A, the inlay IL includes an IC chip C and an antenna AN formed in a predetermined pattern and connected to the IC chip C. The inlay IL is referred to as "RF tag" in some cases.

Alternatively, the support shaft 29 can be loaded with a paper roll into which a sheet of linerless labels is wound, which is not illustrated. The sheet of linerless labels has a print surface and an adhesive surface, on the opposite side to the print surface, on which an adhesive is applied.

Referring to FIG. 2, the printer 2 includes a platen roller 24 rotationally driven by a motor 45. Rotation of the platen roller 24 causes the continuous paper CP to be pulled out from the paper roll R loaded on the support shaft 29 and to be thereby fed in the printer 2. A thermal head 25 is arranged so as to face the platen roller 24. The thermal head 25 includes a heat-generating portion including a plurality of heat-generating elements (heat-generating resistors). A plurality of the heat-generating elements is arranged in a line along a width direction (a direction perpendicular to a feed direction of the continuous paper CP) of the continuous paper CP. The printer 2 prints on each label PL of the continuous paper CP while holding the label PL between the platen roller 24 and the thermal head 25.

The platen roller 24 is rotatable in a forward rotational direction and a reverse rotational direction. Thereby, the continuous paper CP can be fed in a forward direction F and a reverse direction.

A label position detection sensor 27 is provided upstream of the thermal head 25 in the feed direction of the continuous paper CP. The label position detection sensor 27 is a light transmission type sensor including a light-emitting element and a light-receiving element that face each other across the fed continuous paper CP. When the light-receiving element receives light emitted from the light-emitting element, the label position detection sensor 27 detects an end portion of each label PL in the feed direction of the continuous paper CP, based on a difference in received light intensity between light transmitted through the label PL and the liner PM and light transmitted through only the liner PM. A detection result (output signal) of the label position detection sensor 27 is used to control the feeding of the continuous paper CP.

An RFID antenna 26 is provided in the vicinity of a position where the label PL is held between the platen roller 24 and the thermal head 25. The RFID antenna 26 is an antenna for communicating with the inlay IL incorporated in the label PL. A control unit 30 is arranged in the housing of the printer 2. The control unit 30 includes an interrogator 39 (one example of an RFID unit) described below. In a case of reading data from the inlay IL or writing data to the inlay IL, the interrogator 39 controls the RFID antenna 26 to emit electromagnetic waves.

After data are written to the inlay IL of the label PL and printing is performed on the label PL, the label PL is discharged to the outside of the printer 2 through the issuance outlet 23 (FIG. 1).

As illustrated in FIG. 2 indicating transmission and reception of electrical signals by the broken lines, the control unit 30 is electrically connected to the thermal head 25, the motor 45, the label position detection sensor 27, and the RFID antenna 26.

As illustrated in FIG. 3B, a memory in the IC chip C of the inlay IL includes a USER area, a TID area, an EPC area, and a RESERVED area.

The USER area (one example of a user area) is an area available to a user. The USER area is a data area having a capacity larger than that of each of the other areas.

The TID area stores a tag identifier (TID) that is unique identification data written by a manufacturer at the time of manufacturing the RF tag. The TID area is an area that is not writable by the user.

The EPC area includes a UII area, a PC area, and an AFI area. The UII area is an area that is freely readable and writable by the user. The UII area stores an EPC. The EPC is an identification code that is standardized by the GS1 and is written to the RF tag. One example of the EPC is a SGTIN. The SGTIN includes a global trade item number (GTIN including a GS1 company prefix and a product item code) and a serial number appended to the GTIN. The GTIN serves as a product identification code.

The PC area stores protocol control (PC). The PC is control information for communication.

The AFI area stores an application family identifier (AFI). The AFI is data (e.g., data indicating whether the RF tag is used for a product or a reusable packaging material) indicating application of the RF tag. The AFI is prescribed by the ISO/IEC.

The RESERVED area stores a kill password used for deactivating the RF tag, an access password for reading and writing, and the like.

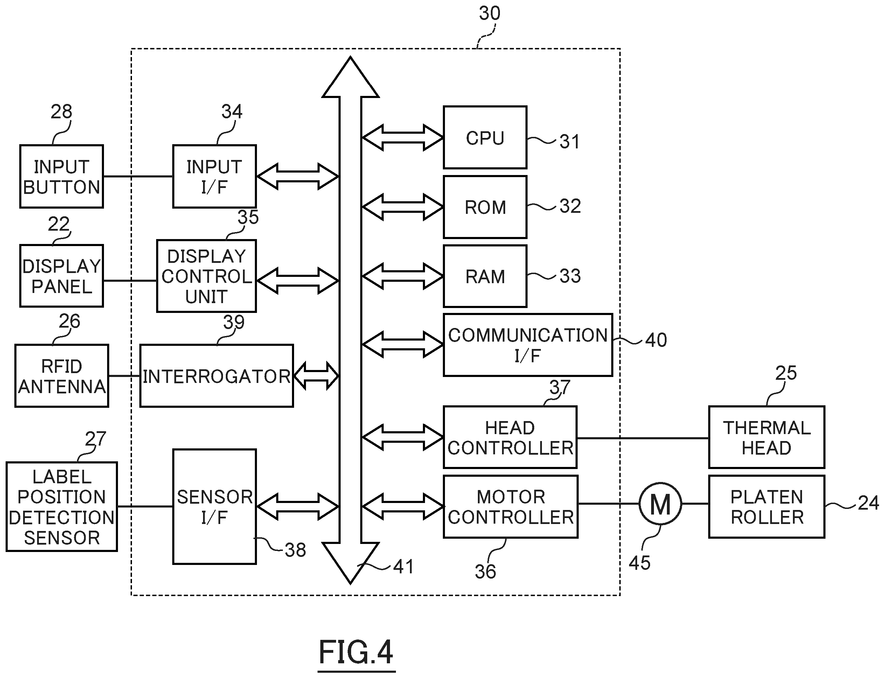

Next, an electrical configuration of the printer 2 is described with reference to the block diagram of FIG. 4.

As illustrated in FIG. 4, the control unit 30 of the printer 2 includes a CPU 31, a ROM 32, a RAM 33, an input interface (I/F) 34, a display control unit 35, a motor controller 36, a head controller 37, a sensor interface (I/F) 38, the interrogator 39, a communication interface (I/F) 40 (one example of a communication unit), and a communication bus 41.

The CPU 31 loads, into the RAM 33, firmware stored in the ROM 32, executes the firmware, and thereby implements various functions of the printer 2.

The firmware controls the feeding of the continuous paper CP, based on an output signal of the label position detection sensor 27. The firmware also records, as the log data, the data read from the inlay IL by the interrogator 39. The firmware transmits, to the interrogator 39, data to be written to the inlay IL of each label by the interrogator 39.

The display control unit 35 receives display data from the CPU 31, and causes the display panel 22 to display an image, based on the received display data. The display panel 22 includes a touch panel type input means.

The input interface 34 is an interface that receives operational input via the input buttons 28 or the touch panel and transmits the received input to the CPU 31.

The motor controller 36 includes a drive circuit that drives the motor 45, based on a control signal sent from the firmware. The control signal includes, for example, information concerning a feed amount of the continuous paper CP in the forward direction or the reverse direction.

The head controller 37 includes an image buffer, and controls electric current to flow selectively through the heat-generating elements included in the heat-generating portion of the thermal head 18, in accordance with print data, based on a control signal (e.g., a strobe signal or the like) sent from the firmware.

The sensor interface 38 receives the output signal of the label position detection sensor 27, converts the received output signal into a digital value, and transmits the converted digital signal to the CPU 31.

The interrogator 39 receives, from the firmware, instruction signals for reading and writing, reads data from the inlay IL, transmits the read data to the CPU 31, and receives, from the CPU 31, data (write data) to be written to the inlay IL. When the interrogator 39 communicates with the inlay IL, the interrogator 39 controls the RFID antenna 26 so as to emit electromagnetic waves of a predetermined intensity at a timing that the label PL including the communication-target inlay IL is fed to a predetermined communication position.

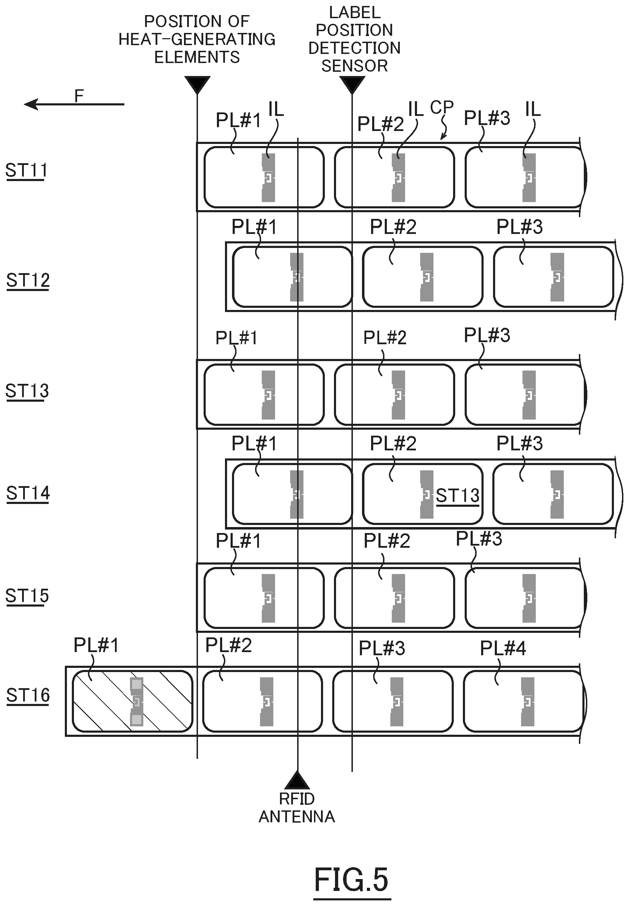

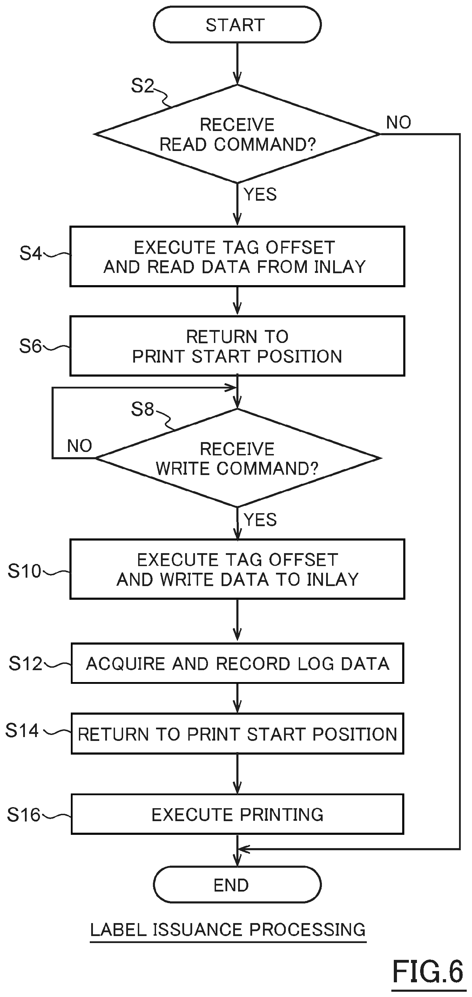

Next, control in a case of issuing the label in the label issuance system 1 is described with reference to FIG. 5 and FIG. 6.

FIG. 5 illustrates one example of feed control when the printer 2 issues a label. FIG. 6 is a flowchart illustrating a series of processing steps (label issuance processing) performed by the printer in a case of issuing a label. The label issuance processing illustrated in FIG. 6 is performed by executing the firmware in the control unit 30.

At the time of issuing the label, the control unit 30 of the printer 2 controls the interrogator 39 to read data in one memory area of a plurality of memory areas (refer to FIG. 3B) included in the inlay and to write the data to a memory area, different than the memory from which the data have been read, of the plurality of the memory areas.

For example, at the time of issuing the label, the control unit 30 controls the interrogator 39 so as to write, to the USER area (one example of the second memory area) of the inlay, the EPC (one example of the first data) stored in the EPC area (one example of the first memory area) of the inlay. In this case, the data written to the USER area of the inlay may be the EPC, or may be data (one example of the second data) based on the EPC. An example of the data based on the EPC is data including the EPC and new information appended to the EPC. Writing the EPC in the USER area enables the EPC to be read by merely accessing only the USER area when an item to which the label has been affixed is distributed or is passed to subsequent processes, for example. Thus, an advantage can be achieved in that expandability or flexibility in using the label is increased.

The following describes the flow in a case of issuing the one label, sequentially referring to states ST11 to ST16 each indicating a fed state of the continuous paper CP in FIG. 5 and steps S2 to S16 in FIG. 6. In an exemplary case described below with reference to FIG. 5 and FIG. 6, the EPC read from the EPC area of the inlay IL is written to the USER area.

FIG. 5 illustrates a positional relation among a position (the position of the heat-generating elements) of the heat-generating portion of the thermal head 25, the position of the label position detection sensor 27, and the RFID antenna 26 along the feed direction, in each of the time-series states of the continuous paper CP (including the first label PL#1, the second label PL#2, and so forth).

As illustrated in the state ST11 in FIG. 5, before issuing the label, the printer 2 causes the print start position of the first label PL#1 to wait in a state of corresponding to the position of the heat-generating elements. When the control unit 30 receives a read command from the host computer 5 (the step S2 in FIG. 6: YES) in this state, the control unit 30 executes tag offset and controls the interrogator 39 to read the EPC from the EPC area of the inlay IL (the step S4 in FIG. 6).

Here, the tag offset means feeding the processing-target label (the label PL#1 in the state ST11 in FIG. 5) in the forward direction or the reverse direction so as to be at an optimum position (communication position) for the inlay IL to communicate with the RFID antenna 26. A feed amount (i.e., an offset amount) at this time is set in advance. In the printer 2 exemplified in FIG. 2, the RFID antenna 26 is located upstream of the position of the heat-generating elements of the thermal head 25 in a feed path for the continuous paper CP. For this reason, the continuous paper CP is fed in the reverse direction as illustrated in the state ST12. When the label PL#1 is at the communication position, electromagnetic waves are emitted from the RFID antenna 26, and thereby, the EPC is read from the EPC area of the inlay IL. The control unit 30 stores the read EPC in the RAM 33. Then, the control unit 30 controls the platen roller 24 such that the print start position of the label PL#1 corresponds to the position of the heat-generating elements again (i.e., the label PL#1 is returned to the print start position) (the state ST13 in FIG. 5 and the step S6 in FIG. 6).

Next, when the control unit 30 receives a write command from the host computer 5 (the step S8 in FIG. 6: YES), the control unit 30 executes the tag offset again and controls the interrogator 39 so as to write, to the USER area of the inlay IL, the EPC stored in the RAM 33 (the state ST14 in FIG. 5 and the step S10 in FIG. 6). In one embodiment, the control unit 30 reads the data (the EPC in this example) that have been written in the inlay IL, and records the read data as log data in a buffer in the control unit 30 (the step S12 in FIG. 6).

Then, the control unit 30 controls the platen roller 24 again such that the print start position of the label PL#1 corresponds to the position of the heat-generating elements again (i.e., the label PL#1 is returned to the print start position) (the state ST15 in FIG. 5 and the step S14 in FIG. 6). Finally, the control unit 30 executes printing on the label PL#1 (the state ST16 in FIG. 5 and the step S16 in FIG. 6).

In the above-described manner, the first label has been issued. The issuance processing of each of the second label PL#2 and the subsequent labels is the same as that of the first label. In order to match the print start position of each label to the position of the heat-generating elements, the label position detection sensor 27 detects an end portion of the label, and the continuous paper CP is fed by a predetermined amount depending on a distance from the position of the label position detection sensor 27 to the position of the heat-generating elements.

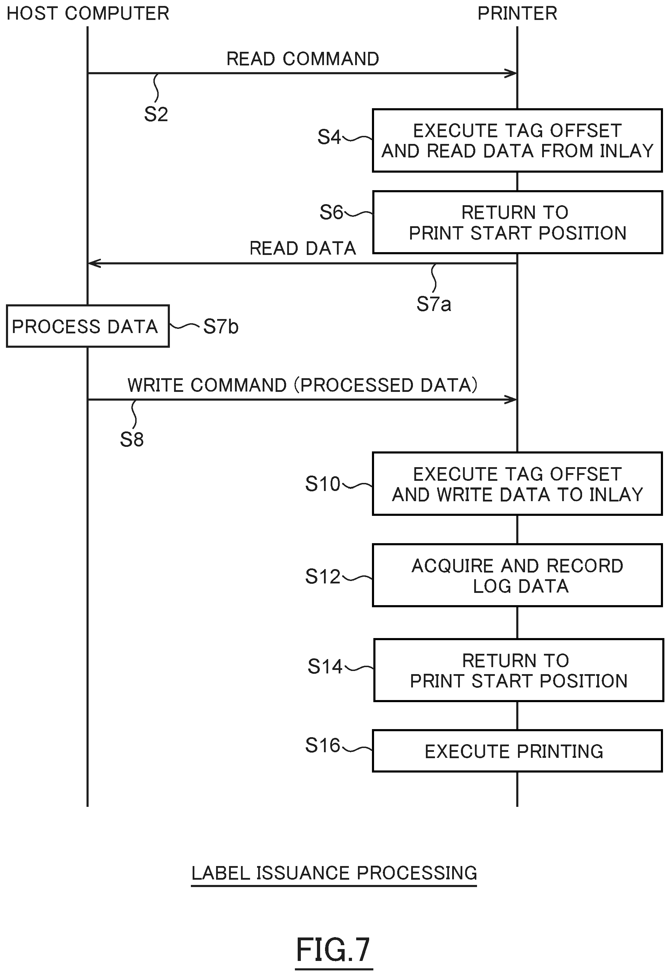

In one embodiment, the data read from the inlay IL of the label PL#1 in the state ST12 in FIG. 5 may be processed by the host computer 5, and then, the data processed by the host computer 5 may be written to the inlay IL in the state ST14. Thereby, expandability or flexibility in using the issued label can be further increased. The label issuance processing in such an embodiment is described with reference to the sequence chart of FIG. 7.

In FIG. 7, the same processing steps as those in the flowchart of FIG. 6 are denoted by the same reference signs, and the overlapping description is omitted. Similarly to FIG. 6, the following describes the exemplary case in which the EPC is read from the EPC area of the inlay IL.

Referring to FIG. 7, when the control unit 30 of the printer 2 reads the EPC from the EPC area of the inlay IL at the step S6, the control unit 30 transmits the read data (read data; the EPC in this example) to the host computer 5 (step S7a). The host computer 5 processes the received read data (step S7b).

The content of the data processing is not particularly limited, and may be, for example, appending code information to the read data (EPC). As described above, the EPC includes a product item code. However, in some cases, when a distributor such as a retailer affixes the issued label to an article to manage the article, the distributor desires to append to the article the unique identification information for managing the article (e.g., desires to perform in-store marking). In such a case, appending the code information (e.g., 4-digit or 8-digit information) to the read EPC, or extracting from the EPC a specified number of digits of data that the user desires to use, increases expandability or flexibility in using the issued label.

In the above-described example, the read data are the EPC. However, when the read data are a TID, a specific unique code in the TID may be extracted and used to generate the processed data.

The host computer 5 transmits, to the printer 2, a write command including the data (processed data) that have been processed at the step S7b (step S8). When the control unit 30 of the printer 2 receives the write command, the control unit 30 executes the tag offset and controls the interrogator 39 so as to write, to the USER area of the inlay IL, the processed data included in the write command (step S10).

The subsequent processing is the same as that illustrated in FIG. 6. At the step S16, the control unit 30 may perform control so as to cause the processed data received at the step S8 to be printed on the label.

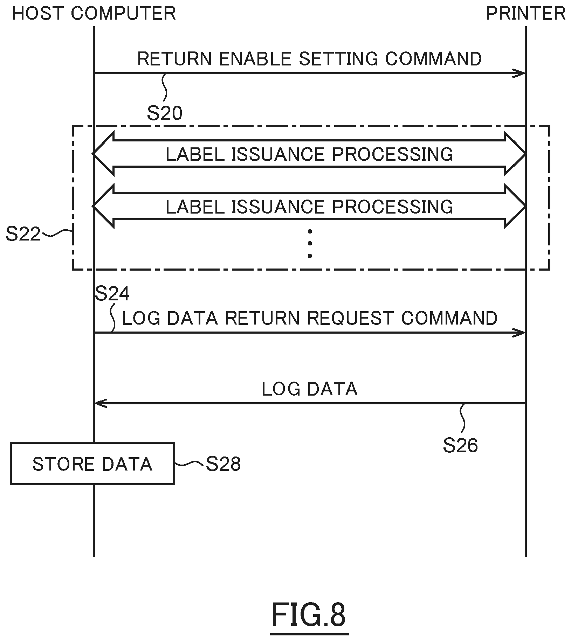

In one embodiment, the printer 2 may transmit the log data stored in the buffer back to the host computer 5 at the step S12 in FIG. 6 and FIG. 7. Thereby, based on the log data received by the host computer 5, the user can easily manage the label that has been issued, and can further manage the product to which the label has been affixed. The processing between the host computer 5 and the printer 2 in such an embodiment is described with reference to the sequence chart of FIG. 8.

Referring to FIG. 8, the host computer 5 transmits a return enable setting command to the printer 2 in advance (step S20). The return enable setting command is a command for enabling the printer 2 to transmit the log data back. Next, one or more times of the label issuance processing is performed between the host computer 5 and the printer 2 (step S22). The label issuance processing is performed as illustrated in FIG. 7. While FIG. 7 illustrates the label issuance processing when a single label has been issued, FIG. 8 illustrates the label issuance processing successively performed the number of times desired by the user. In this case, each time the label issuance processing is performed, the log data for the single label are stored in the buffer of the control unit 30.

An amount of the log data that can be stored in the buffer may be limited (e.g., limited up to the log data corresponding to the 100 labels). In this case, when an amount of the log data stored in the buffer reaches the maximum storable amount, the newly acquired log data are overwritten on the oldest log data in the buffer.

When the one or more times of the label issuance processing is completed, the host computer 5 transmits a return request command for the log data to the printer 2 (step S24). In response to the return request command, the control unit 30 of the printer 2 collectively transmits, back to the host computer 5, the log data corresponding to one or more labels stored as a result of the one or more times of the label issuance processing (step S26). The host computer 5 stores the log data in a storage or the like (step S28).

The log data acquired from the inlay IL at the step S12 in FIG. 6 and FIG. 7 may be all the data written in the inlay IL, or may be data included in the inlay IL and previously selected by the user. In other words, the control unit 30 may read the data in at least one memory area of the memory areas of the inlay IL, and may record the read data as the log data. Thereby, traceability for each label to be issued is secured.

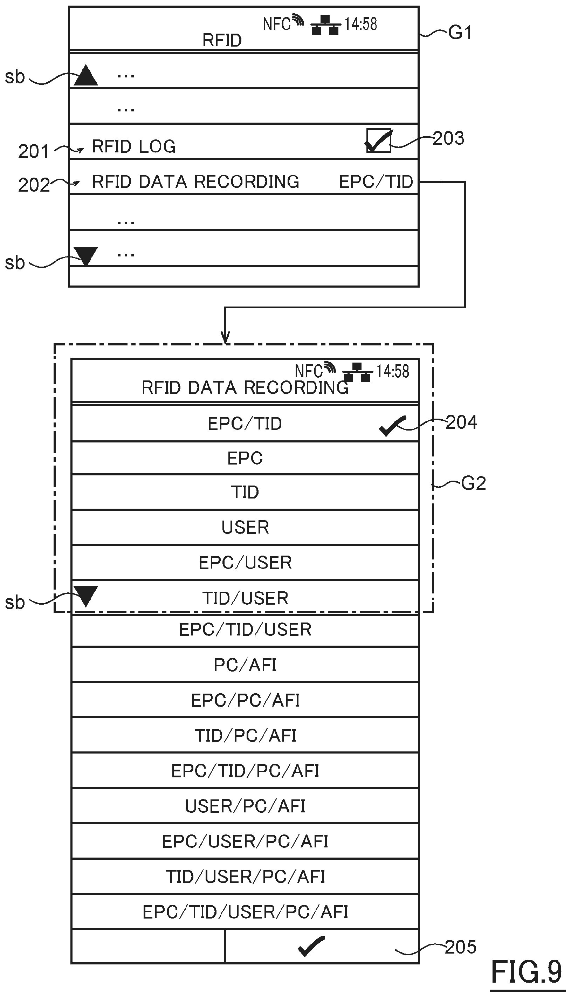

FIG. 9 illustrates steps for the user to select, on the display panel 22 of the printer 2, data to be acquired as the log data from the inlay IL. An image G1 in FIG. 9 is a screen image for settings of the printer 2, concerning the RFID. The image G1 is configured such that a list of items including an item 201 ("RFID log") and an item 202 ("RFID data record") can be displayed by scrolling operated by a scroll button sb.

The item 201 on the image G1 is an item of setting for transmitting the log data back to the host computer 5, and a check mark can be set or unset in a checkbox 203 by a user operation.

In a case where the check mark is set in the checkbox 203, when the log data return request command (step S24 in FIG. 8) is received, the log data stored in the buffer for a plurality of the labels are transmitted back to the host computer 5 in the chronological order at the step S26. In this case, the buffer is cleared after the log data are transmitted back. In a case where the check mark is unset in the checkbox 203, when the log data return request command is received, the log data for the most recent single label are transmitted back to the host computer 5, and the buffer is not cleared after the log data are transmitted back. Regardless of whether the check mark is set or unset, all the log data are erased when the printer 2 is turned off.

The item 202 on the image G1 is an item for selecting data to be acquired as the log data from the inlay IL. The image G1 indicates a state where the EPC and the TID (EPC/TID) are selected as the log data. Operating the item 202 causes the image G1 to be changed to an image G2.

The image G2 is a screen image for enabling user operation to select, from a data list, the data to be acquired as the log data from the inlay IL. The data list is a list of items each of which is one of pieces of the data (EPC, TID, USER, PC, AFI) acquirable as the log data from the inlay IL or a combination of two or more of these pieces. Note that "USER" refers to the data stored in the USER area (refer to FIG. 3B).

The data list on the displayed image G2 can be changed by operating the scroll button sb. Since the EPC and the TID are currently selected as the log data, a check mark 204 is attached to "EPC/TID". After one of pieces of the data or a combination of two or more pieces of the data are selected from this data list, operating a confirm button 205 changes the data that can be acquired as the log data from the inlay IL. In other words, the printer 2 reads the data in one or more memory areas that are previously selected by the user from a plurality of the memory areas, and records the read data as log data. Thus, the printer 2 can record only the data required by the user.

Selecting one item of the data from the data list on the image G2 is substantially equivalent to selecting one or more memory areas of a plurality of the memory areas of the inlay IL.

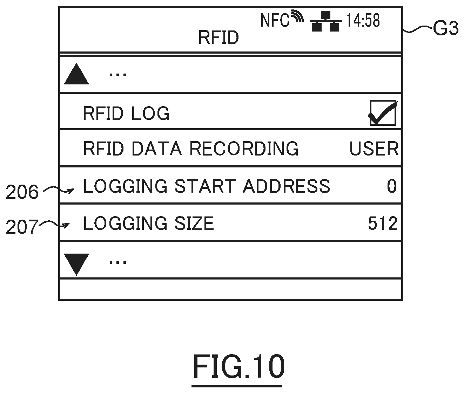

Selecting "USER" from the data list on the displayed image G2 causes an image G3 in FIG. 10 to be displayed. The image G3 is a screen image for settings of the printer 2, concerning the RFID, similarly to the image G1. However, the image G3 differs from the image G1 in that an item 206 ("logging start address") and an item 207 ("logging size") are added to the image G3. When "USER" or a combination of the data including "USER" is selected, user operation enables a logging start address and a logging size to be determined as an address range of a specified size that can be used for recording the log data. The USER area is a data area having capacity larger than that of each of the other areas; however, specifying the logging start address and the logging size limits the log-target data from the data in the USER area. Thereby, the time required to record the log data in issuing each label is shortened. Thus, throughput of issuing the labels is improved.

In the example described based on FIG. 9 and FIG. 10, the user operates the printer 2 to select the data that can be acquired as the log data from the inlay, and the user operates the printer 2 to determine an address range, in the USER area, from which the log data are acquired. However, there is no limitation to these. These settings may be made by a write command from the host computer 5 (the step S8 in FIG. 6 and FIG. 7), instead of operating the printer 2.

Although the embodiments of the printer according to the present invention are described above, the present invention is not limited to the above-described embodiments. The above-described embodiments can be variously improved or modified without departing from the essence of the present invention.

For example, the data that can be stored as the log data are not limited to the data read from the inlay. The log data may include received signal strength (RSSI) at which the read data are received. When a temperature sensor measuring an ambient temperature of the control unit 30 or the RFID antenna 26 is provided, the log data may include information of the temperature detected by the temperature sensor.

When a sheet of the linerless labels is used, the label position detection sensor may be a light reflection type sensor for detecting a position detection mark for each label. The position detection marks may be arranged on a back surface of the sheet of the linerless labels.

The present invention is related to Japanese Patent Application No. 2023-128944 filed with the Japan Patent Office on August 8, 2023, the entire contents of which are incorporated by reference into the Description of the present application.

## Claims

1. A printer that issues a print medium including an RFID inlay, the printer comprising:
an RFID unit that communicates with the RFID inlay of the print medium; and
a control unit configured to control the RFID unit to:
read first data in a first memory area of a plurality of memory areas included in the RFID inlay, and
write the first data or second data that is based on the first data, to a second memory area, which is different from the first memory area, of the plurality of memory areas.

2. The printer according to claim 1 further comprising a platen roller that feeds the print medium, wherein
the control unit is configured to control the platen roller to:
feed the print medium from a print start position to a communication position, and
feed the print medium back to the print start position after reading the first data from the RFID inlay, wherein the print start position is a position at which printing on the print medium is started, and the communication position is a position at which communication with the RFID inlay of the print medium is performed by the RFID unit.

3. The printer according to claim 2, wherein
the control unit is configured to control the platen roller to:
feed the print medium from the print start position to the communication position after feeding the print medium back to the print start position, and
feed the print medium back to the print start position after writing the second data to the RFID inlay.

4. The printer according to any one of claims 1 to 3, comprising:
a communication unit that communicates with an external information processing device, wherein
the communication unit is configured to transmit, to the information processing device, the first data read from the first memory area, and receive the second data from the information processing device.

5. The printer according to any one of claims 1 to 3, wherein
the control unit is configured to:
write the second data to the second memory area, and then
read data in at least one memory area of the plurality of memory areas, and record the read data as log data.

6. The printer according to claim 5, wherein
the control unit is configured to read data in one or more memory areas of the plurality of memory areas and pre-selected by a user, and record the read data as the log data.

7. The printer according to claim 6, wherein
the plurality of memory areas includes a user area available to a user, and
when the user of the plurality of memory areas is selected, the control unit is configured to determine, based on user input, an address area in the user area, the address area having a size allowing the log data to be recorded therein.

8. An information processing method by a printer that issues a print medium including an RFID inlay, the information processing method comprising:
reading, by use of an RFID unit, first data in a first memory area of a plurality of memory areas included in the RFID inlay; and
writing, by use of the RFID unit, the first data or second data that is based on the first data, to a second memory area, which is different from the first memory area, of the plurality of memory areas.

9. A program, when installed in a printer configured to issue a print medium including an RFID inlay, causing a computer to execute processing comprising:
reading, by use of an RFID unit of the printer, first data in a first memory area included in a plurality of memory areas included in the RFID inlay; and
writing, by use of the RFID unit, the first data or second data that is based on the first data, to a second memory area, which is different from the first memory area, of the plurality of memory areas.
